## Europäisches Patentamt

## European Patent Office

## Office européen des brevets

(11) Veröffentlichungsnummer: **0 140 159**
**B1**

(12) **EUROPÄISCHE PATENTSCHRIFT**

(45) Veröffentlichungstag der Patentschrift:
15.07.87

(51) Int. Cl.⁴: **H 02 P 8/00**

(21) Anmeldenummer: **84111478.8**

(22) Anmeldetag: **26.09.84**

(54) **Messverfahren für den statischen und den dynamischen Lastwinkel eines Schrittmotors.**

(30) Priorität: **29.09.83 DE 3335420**

(43) Veröffentlichungstag der Anmeldung:
**08.05.85 Patentblatt 85/19**

(45) Bekanntmachung des Hinweises auf die Patenterteilung:
**15.07.87 Patentblatt 87/29**

(84) Benannte Vertragsstaaten:
**BE CH DE FR GB IT LI NL SE**

(56) Entgegenhaltungen:
**US - A - 4 074 179**

**IBM TECHNICAL DISCLOSURE BULLETIN, Band 24, Nr. 8, Januar 1982, Seiten 4274-4276, New York, USA; G. GOLDRIAN: "Stepper motor control by load angle measurement"**
**IBM TECHNICAL DISCLOSURE BULLETIN, Band 23, Nr. 2, Juli 1980, Seiten 439-440, New York, USA; M.H. SKELTON et al.: "Stepper motor lead angle bounding"**
**IBM TECHNICAL DISCLOSURE BULLETIN, Band 22, Nr. 8A, Januar 1980, Seite 3050, New York, USA; M.H. SKELTON et al.: "Electrical lead angle monitor"**

(73) Patentinhaber: **Siemens Aktiengesellschaft Berlin und München, Wittelsbacherplatz 2, D-8000 München 2 (DE)**

(72) Erfinder: **Frystacki, Henryk, Dipl.-Ing., Mozartstrasse 9, D-8033 Krailling (DE)**

## Beschreibung

Die Erfindung betrifft ein Messverfahren für den statischen Lastwinkel eines Schrittmotors gemäss dem Oberbegriff des Patentanspruchs 1 und eine Schaltungsanordnung zur Durchführung des Verfahrens.

Elektrische Motore, und insbesondere Schrittmotore, sind physikalisch gesehen Umformer, die eine elektrische Eingangsgrösse in eine mechanische Ausgangsgrösse umwandeln. Der Schrittmotor besitzt entsprechend seiner Konstruktion eine Antriebswelle oder einen Rotor, der pro Eingangsspannungsimpuls um einen genau definierten Winkel schrittweise verdreht wird. Dieser Winkel wird i.a. als Schrittwinkel bezeichnet, und ist durch den konstruktiven Aufbau des Schrittmotors festgelegt. Bei einem Schrittmotor handelt es sich also um ein diskretes Stellglied, das quantisierte Drehbewegungen ausführen kann.

Bei einer entsprechend hohen Folgefrequenz der Eingangsspannungsimpulse geht diese schrittweise Drehbewegung in einen kontinuierlichen Synchronlauf über. Eine Einführung und Übersicht über gebräuchliche Schrittmotore ist in der Zeitschrift «Elektronik», Jan. 67, Heft 1, Seite 1 bis 6 und Heft 2, Seite 53 bis 57, und in dem Aufsatz «Schrittmotoren-Aufbau, Funktionsweise und Anwendung» der Fa. Gerhard Berger GmbH + Co. in Lahr, veröffentlicht.

Die Erfindung bezieht sich insbesondere auf einen zweiphasigen, bzw. zweiphasig ansteuerbaren Schrittmotor mit permanentmagnetischer Erregung. Dieser Schrittmotor besitzt als Rotor einen gezahnten Permanentmagnetanker. Sein Stator besteht aus zwei Statorsystemen, entsprechend den beiden verwendeten Phasen. Jedes der beiden Statorsysteme besteht aus einem Stator-Kranz mit Zähnen bzw. Polen. Die beiden Statorsysteme sind derart angeordnet, dass bei einer Abwicklung der Stator-Kränze die Zähne des einen, den Zwischenräumen des anderen gegenüberstehen.

Jedem Statorsystem ist ein magnetisierendes Wicklungssystem zugeordnet, aufgrund dessen die zugehörigen Zähne eine abwechselnde Folge von Nord- und Südpolen bilden.

Das prinzipielle Ansteuerverfahren, sowie verschiedene Bauformen und verschiedene Ansteuerverfahren um einen solchen Schrittmotor in eine Drehbewegung zu versetzen, sind in dem oben erwähnten Aufsatz der Fa. Berger auf Seite 3 beschrieben.

Bei der Drehbewegung des Schrittmotors werden beispielsweise die Wicklungen der beiden Statorsysteme von Strömen wechselnder Polarität durchflossen, deren Polaritätswechsel um 90° phasenversetzt sind. Diese Art der Ansteuerung wird in der einschlägigen Fachliteratur als bipolare Zweistrangansteuerung bezeichnet. Der Wechsel der Polarisierung der Pole eines Statorsystems bewirkt das Weiterdrehen des Rotors des Schrittmotors um einen Schritt. Der sequentielle Wechsel der Polarisierung, der abwechselnd in beiden Statorsystemen erfolgt, bewirkt die kontinuierliche Drehbewegung des Rotors.

Durch die Phasenversetzung in positiver oder negativer Richtung ist die Richtung der Drehbewegung des Schrittmotors festgelegt.

Ein Schrittmotor besitzt keine mechanisch wirkenden Raststellungen, sondern elektromagnetische. Eine solche Raststellung ist geometrisch beispielsweise dadurch gekennzeichnet, dass aufgrund einer entsprechenden Magnetisierung ein Nordpol des Rotors (d.h. der Zahn oder Pol, der ein permanentmagnetischer Nordpol ist), sich zwischen zwei Südpolen der Statorsysteme befindet, wobei jedes Statorsystem einen Südpol beisteuert. Für die andere Polarität gilt das Analoge. Durch die Überlagerung der magnetischen Kräfte der beiden Statorsysteme, die charakteristisch für die oben genannte bipolare Zweistrangansteuerung ist, wird der Rotor des Schrittmotors in einer stabilen Lage, d.h. in der Raststellung gehalten.

Bei der Drehbewegung des Schrittmotors ist die Anzahl (pro Sekunde) der durchlaufenden Raststellungen durch den Wert der Frequenz (d.h. der Impulsfolgefrequenz) des Schrittaktes bestimmt. Der Wert der Frequenz des Schrittaktes ist viermal so gross wie der Wert der Frequenz des Wechselstromes durch die Wicklung eines der Statorsysteme. Bei einem kontinuierlichen Synchronlauf des Schrittmotors ist die Frequenz des Schrittaktes der Drehzahl proportional.

Mit Hilfe des Lastwinkels, der eine nach DIN 42 021 definierte und messbare Grösse ist, werden die Bewegungsvorgänge des Rotors eines Schrittmotors in einem ständerfesten Koordinatensystem beschrieben. Der Ständer, genauer der zweipolige Ständer, ist hierbei ein anderer Fachausdruck für die beiden Statorsysteme.

Nach DIN 42 021 wird zwischen einem statischen und einem dynamischen Lastwinkel unterschieden.

Der statische Lastwinkel ist definiert als der Winkel, um den sich die Welle (und damit der Rotor) des Schrittmotors gegenüber der elektromagnetischen Raststellung unter einem statisch einwirkenden Drehmoment verdreht.

Der dynamische Lastwinkel ist definiert als der Winkel, um den der sich drehende Rotor des Schrittmotors in einem bestimmten Zeitpunkt von der durch den letzten Impuls des Schrittaktes gegebenen elektromagnetischen Raststellung entfernt ist.

Weiter kann für eine messtechnische Beschreibung der Bewegung des Rotors des Schrittmotors und für regelungstechnische Zwecke ein dynamischer Schrittlastwinkel festgelegt werden. Dieser dynamische Schrittlastwinkel ist der Winkel, um den der sich drehende Rotor in dem Zeitpunkt einer Schrittfortschaltung durch den Schrittakt von der durch den Impuls des Schrittaktes gegebenen elektromagnetischen Raststellung entfernt ist. Der dynamische Schrittlastwinkel ist also der dynamische Lastwinkel zum Zeitpunkt einer Schrittfortschaltung durch den Schrittakt.

Schrittmotore werden heutzutage bei vielen Geräten verwendet, um Teile in bestimmte Positionen zu bringen bzw. mit vorgegebener Geschwindigkeit zu bewegen. So werden beispielsweise bei Schreib- und Druckwerken Systeme, wie der Wagen, das Typenrad, die Schreibwalze und eine Reihe anderer Einrichtungen mit Hilfe von Schrittmotoren bewegt.

Für die Ansteuerung des Schrittmotors ergeben sich nach seiner Verwendungsart verschiedene Probleme. Wenn der Rotor entgegen einem äusseren Drehmoment in seiner elektromagnetischen Rastposition gehalten werden soll, so muss der Schrittmotor mit einem Strom ausreichender Stärke versorgt werden. Wenn der Rotor und ein mitbewegtes System beschleunigt oder gleichförmig bewegt werden soll, so muss die Stärke des anliegenden Stromes und die Frequenz des Schrittaktes so gewählt werden, dass der Schrittmotor nicht aus dem Tritt fällt. Dies bedeutet, dass bei diesem Betriebszustand der dynamische Schrittlastwinkel einen bestimmten Grenzwert nicht überschreiten darf.

Es ist bekannt, die Wicklungssysteme des Ständers des Schrittmotors mit einem Strom konstanter Stromstärke zu versorgen. Hierbei wird der Schrittmotor im Stillstand, während der Drehbewegung, und u.U. beim Beschleunigen und beim Abbremsen mit Strömen unterschiedlicher Stromstärke versorgt, da das von der Welle des Schrittmotors abgegebene Drehmoment von den in den Wicklungssystemen fliessenden Strömen abhängig ist.

Es ist bekannt zur Stromversorgung sogenannte Zweipunktstromregler zu verwenden. Diese geben einen Strom ab, dessen Stärke zwischen zwei Werten variiert, so dass die Differenz zwischen diesen beiden Werten eine konstante Grösse ist.

Für den Schrittmotor ist, abhängig von der Stärke des jeweils anliegenden Stromes eine Impulsfolge, eine sogenannte Schrittfolge zu ermitteln, die ihn einerseits schnell beschleunigt bzw. abbremst, und die andererseits die Sicherheit bietet, dass er nicht durch Störeinflüsse, wie z.B. Schräglage, Laständerung oder Temperatureinflüsse aus dem Tritt fällt. Die Schrittfolge kann empirisch optimiert werden. Eine optimale Schrittfolge ist dadurch gekennzeichnet, dass der Schrittmotor schnell beschleunigt bzw. abgebremst wird, wobei die Betriebssicherheit gewährleistet ist. Eine Schrittfolge zur Beschleunigung des Schrittmotors besteht aus einer Impulsfolge von Schrittakten, deren Frequenz von einer sogenannten Start-Stop-Frequenz bis zu einer durch die Konstruktion des Schrittmotors und des bewegten Systems bedingten Grenzfrequenz zunehmen kann. Eine Schrittfolge zur Abbremsung besteht aus einer Folge von Schrittakten, deren Frequenz bis zu der Frequenz abnimmt, bei der dann der Schrittmotor sicher in einer Rastposition angehalten werden kann.

Aus der DE-OS 3 138 554 ist ein Messverfahren zur Optimierung einer Schrittfolge bekannt. Dieses weist eine auf der Achse des Schrittmotors angeordnete Taktscheibe auf, mit in radialer Richtung angebrachten Markierungen im Abstand des Schrittwinkels des Schrittmotors. Mit einer Lichtschranke werden diese Markierungen abgetastet, und die so erhaltenen Schrittsignale zeitgerecht, d.h. in der richtigen zeitlichen Beziehung zu den Impulsen des Schrittaktes mit diesen aufgezeichnet. Auf diese Weise kann zu jeder Impulsauslösung durch den Schrittakt der zgehörige Lastwinkel (dynamische Schrittlastwinkel) ermittelt werden. Wenn der Wert des Lastwinkels einen bestimmten Grenzwert überschreitet, fällt der Schrittmotor aus dem Tritt und bleibt stehen. Mit diesem Verfahren lässt sich empirisch eine optimale Schrittfolge ermitteln.

Aus der US-A-4 119 901 ist es bekannt, einen Schrittmotor abhängig vom Lastwinkel zu steuern, wobei zur Bestimmung des Lastwinkels der Motorstrom ausgewertet wird. Hierzu werden mit Hilfe einer Zähl- und Addiereinrichtung und eines Digital-Analog-Spannungswandlers Führungsimpulse in Motorimpulse umgewandelt und einem spannungsgesteuerten Oszillator zugeführt und an eine Motorregelschaltung weitergegeben. Diese Motorregelschaltung enthält eine Wicklung die mit dem Oszillator verbunden ist und wobei die induzierte Spannung in dieser Wicklung in Beziehung zu dem in der Motorwicklung fliessenden Strom steht und als Kriterium für die Grösse des Lastwinkels des Schrittmotors dient.

Es ist Aufgabe der Erfindung ein Messverfahren für den statischen Lastwinkel eines Schrittmotors anzugeben, wobei die erzielten Messgrössen zur Regelung des Schrittmotors verwendbar sind.

Diese Aufgabe wird erfindungsgemäss durch die im kennzeichnenden Teil des Patentanspruches 1 angegebenen Merkmale gelöst.

Ein grosser Vorteil des erfindungsgemässen Messverfahrens ist seine Unabhängigkeit von der Drehzahl des Schrittmotors.

Bei der Verwendung des erfindungsgemässen Steuersignals zur Regelung eines positionierenden Schrittmotors sind optische Abtasteinrichtungen und Bewegungssensoren nicht mehr nötig.

Dadurch, dass das Steuersignal zu den Kommutierungszeitpunkten der beiden Motorströme ausgegeben wird, ist dieses abhängig vom dynamischen Lastwinkel.

Im folgenden wird die Erfindung anhand eines in der Zeichnung dargestellten Ausführungsbeispiels beschrieben.

Dabei zeigen:

Fig. 1 ein Blockschaltbild einer Ansteuerschaltung für einen Schrittmotor, bei der das erfindungsgemässe Verfahren benützt wird,

Fig. 2 eine Ausführungsform eines Schrittmotorphasengebers,

Fig. 3 eine Ausführungsform eines Zweipunkt-Stromreglers,

Fig. 4 eine Ausführungsform einer Schaltbrücke,

Fig. 5 eine Auswahlstufe und eine Messeinrichtung zur Durchführung des erfindungsgemässen Verfahrens,

Fig. 6 Impulssequenzen auf einigen Steuerleitungen der Ansteuerschaltung,

Fig. 7 Impulssequenzen auf Steuerleitungen der Auswahlstufe und der Messeinrichtung,

Fig. 8 eine vereinfachte Ausführungsform der Messeinrichtung.

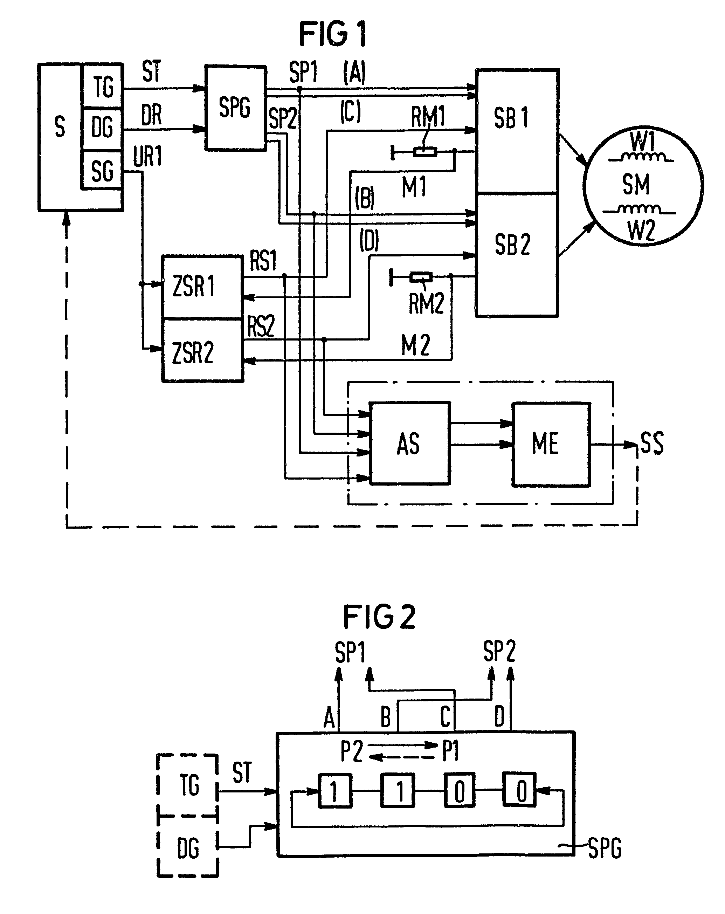

In Fig. 1 ist eine Ansteuerschaltung für einen Schrittmotor SM dargestellt. Der Schrittmotor SM ist hierbei ein zweiphasiger Schrittmotor mit zwei Wicklungssystemen W1, W2. Die Ansteuerschaltung besteht aus den üblicherweise verwendeten Baustufen, einer Steuerung S, einem Schrittmotorphasengeber SPG, zwei Zweipunktstromreglern ZSR1 und ZSR2 und zwei Schaltbrücken SB1 und SB2. Erfindungsgemäss vorgesehene Baustufen sind eine Auswahlstufe AS und eine Messeinrichtung ME.

Die Steuerung S enthält u.a. einen Taktgeber TG, einen Drehrichtungsgeber DG und einen Sollwertgeber SG. Der Taktgeber TG und der Drehrichtungsgeber DG geben einen Schrittakt ST und ein Drehrichtungssignal DR an den Schrittmotorphasengeber SPG. Aufgrund dieser beiden Signale gibt der Schrittmotorphasengeber die beiden Schrittmotorphasen SP1 und SP2 an die beiden Schaltbrücken SB1 und SB2. Die beiden Schrittmotorphasen SP1 und SP2 werden hierbei jeweils auf zwei Steuerleitungen SP1(A) und SP1(C) sowie SP2(B) und SP2(D) ausgegeben. Der Sollwertgeber SG gibt eine Referenzspannung UR1 an die beiden Zweipunktstromregler ZSR1 und ZSR2. Diese geben Reglersignale RS1 und RS2 an die beiden Schaltbrücken SB1 und SB2. Messsignale M1 und M2, die an Messwiderständen RM1 und RM2 von den beiden Schaltbrücken SB1 und SB2 abgreifbar sind, werden an die beiden Zweipunktstromregler ZSR1 und ZSR2 gegeben. Die beiden Schrittmotorphasen SP1 und SP2 sowie die beiden Reglersignale RS1 und RS2 werden auch an die Auswahlstufe AS gegeben. Aus diesen Signalen bildet die mit der Auswahlstufe AS verbundene Messeinrichtung ME ein Steuersignal SS. Dieses Steuersignal SS ist zur Regelung der Steuerung S verwendbar.

Im folgenden wird das Prinzip des erfindungsgemässen Messverfahrens erläutert.

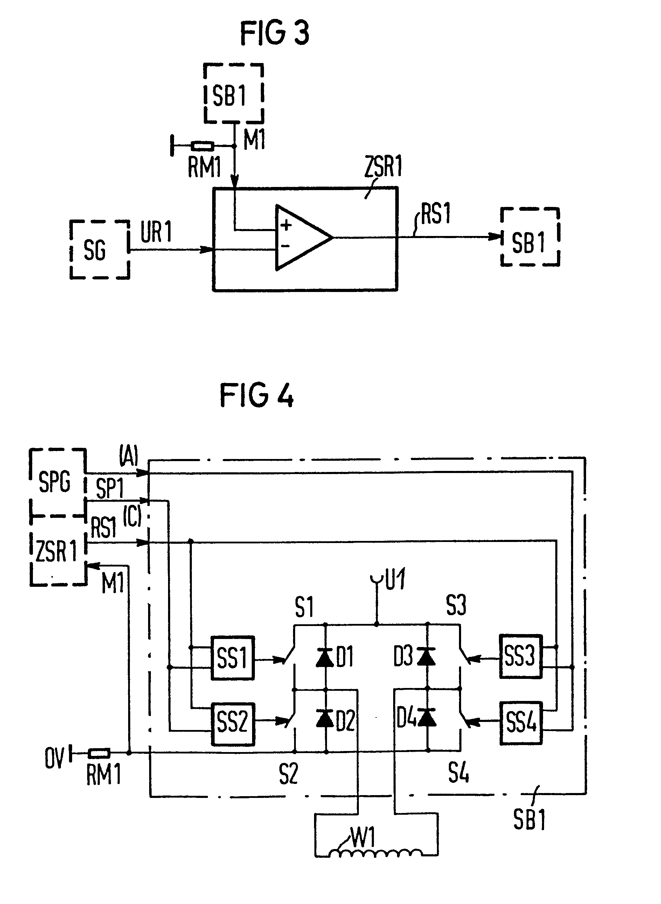

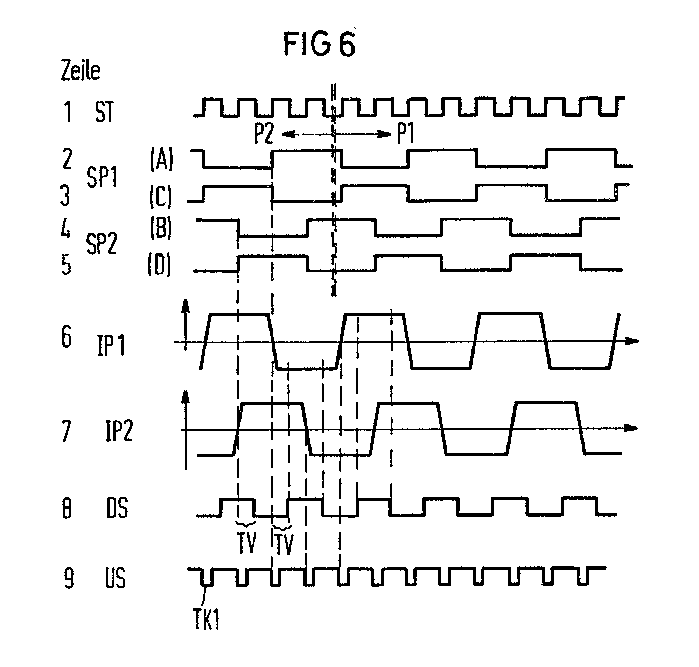

Wie später anhand von Fig. 3 und von Fig. 6 genauer erläutert wird, wird von den beiden Zweipunktstromreglern ZSR1 und ZSR2 jeweils eine pulsbreitenmodulierte Rechteckspannung als Reglersignal RS1 und RS2 abgegeben. Diese Reglersignale RS1 und RS2 bewirken in den beiden Wicklungssystemen W1 und W2 Ströme (später als Motorströme IP1 und IP2 bezeichnet), die eine sogenannte Restwelligkeit mit einer konstanten Amplitude (später durch den hochfrequenten Dreiecksstrom dargestellt) aufweisen.

In Abhängigkeit von den äusseren und inneren Bedingungen, d.h. von angreifenden Kräften, von Reibungswiderständen, von Laständerungen u.ä.m., ändert sich die Pulsbreite der Reglersignale RS1 und RS2. Diese Änderung der Pulsbreite, die sich in einer zeitlichen Änderung von Einschalt- und Ausschaltzeit (später mit $t_E$ und $t_AS$ bezeichnet) äussert, wird erfindungsgemäss von der Messeinrichtung ME ausgewertet. Die Pulsbreitenänderung der Reglersignale RS1 und RS2 ist abhängig vom statischen bzw. vom dynamischen Lastwinkel.

Dadurch, dass die Einschalt- und Ausschaltzeiten ausgewertet werden, ist das von der Messeinrichtung ME ermittelte Steuersignal SS unabhängig von der elektromotorischen Kraft des Schrittmotors SM, und daher unabhängig von der Betriebsfrequenz bzw. von der Drehgeschwindigkeit.

Der Schrittmotor kann bidirektional als Stell- und Messglied verwendet werden, so dass optische Abtaster und Bewegungssensoren unnötig sind.

In Fig. 2 ist der prinzipielle Aufbau des Schrittmotorphasengebers SPG dargestellt, der hier in bekannter Weise durch einen sogenannten Ringzähler realisiert ist. Dieser Ringzähler ist ein Schieberegister mit vier Speicherplätzen, deren Inhalt in beiden Richtungen zyklisch verschiebbar ist. In zyklischer Reihenfolge enthalten die Speicherplätze zweimal die Eins und zweimal die Null. Der Inhalt der Speicherplätze ist an den Ausgängen A, B, C und D des Schrittmotorphasengebers SPG auslesbar. Hierbei bilden die beiden Ausgänge A und C die Schrittmotorphase SP1, d.h. SP1(A) und SP1(C), sowie die Ausgänge B und D die Schrittmotorphase SP2, d.h. SP1(B) und SP1(D). Synchron zum vom Taktgeber TG abgegebenen Schrittakt ST wird der Inhalt der Speicherplätze zyklisch verschoben. Durch das vom Drehrichtungsgeber DG abgegebene Drehrichtungssignal DR ist die Verschieberichtung bestimmt. Die beiden möglichen Verschieberichtungen sind durch die beiden Pfeile P1 und P2 dargestellt.

In Fig. 3 ist der wesentliche Aufbau des an sich bekannten Zweipunktstromreglers ZSR1 dargestellt. Dieser enthält einen Komparatorverstärker, der das von der Schaltbrücke SB1 abgegebene Messsignal M1, das am nichtinvertierenden Eingang anliegt, mit der vom Sollwertgeber SG abgegebenen Referenzspannung UR1, die am invertierenden Eingang anliegt, vergleicht. In bekannter Weise ermittelt der Zweipunktstromregler ZSR1 hinaus das Regelsignal RS1, das zur Steuerung des Stromes im Schrittmotor SM an die Schaltbrücke SB1 gegeben wird. Das Regelsignal RS1 bewirkt im Wicklungssystem W1 des Schrittmotors SM einen Strom mit einer Restwelligkeit mit einer konstanten Amplitude.

Für den Zweipunktstromregler ZSR2 gilt Analoges.

In Fig. 4 ist die an sich bekannte Schaltbrücke SB1 dargestellt. Diese besteht aus vier Schaltern S1 bis S4 mit parallel geschalteten Dioden D1 bis D4 in Brückenschaltung. Die Schalter S1 bis S4 sind von Schaltersteuerungen SS1 bis SS4 ansteuerbar. An den Schaltersteuerungen SS1 bis SS4 liegen die vom Schrittmotorphasengeber SPG abgegebene Schrittmotorphase SP1 [d.h. SP1(A) und SP1(C)] und das vom Zweipunktstromregler ZSR1 abgegebene Reglersignal RS1 an.

Die Schaltbrücke SB1 dient zur Stromversorgung des Wicklungssystems W1 des hier nicht dargestellten Schrittmotors SM. Im Wicklungssystem W1 fliesst beispielsweise ein Strom von einer Spannungsquelle U1 über die Schalter S1 und S4 und über den Messwiderstand RM1 zu einem Bezugspotential OV, wenn die Schalter S1 und S4 geschlossen und die Schalter S2 und S3 geöffnet sind. Werden die Schalter S1 und S4 wieder geöffnet, so fliesst der Strom im Wicklungssystem W1 aufgrund dessen Induktivität über die Dioden D2 und D3 weiter. Analoges gilt für die andere Stromrichtung über die Schalter S2 und S3 bzw. die Dioden D1 und D4.

An dem niederohmigen Messwiderstand RM1 ist eine, dem Strom im Wicklungssystem W1 proportionale Spannung, das Messsignal M1 abgreifbar. Durch die Schrittmotorphase SP1 ist die Richtung, und durch das Regelsignal RS1 ist die Stärke des Stromes im Wicklungssystem W1 über die Schaltersteuerungen SS1 bis SS4 bestimmbar.

Für die Schalterbrücke SB2 und das Wicklungssystem W2 gilt das Analoge.

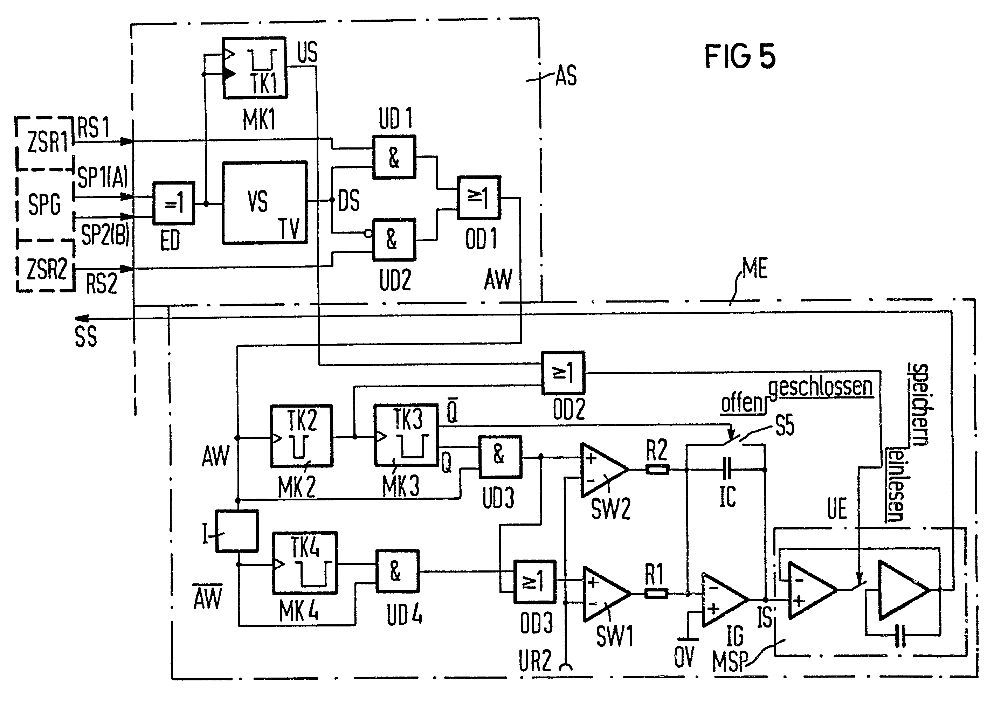

In Fig. 5 ist der Aufbau der Auswahlstufe AS und der Messeinrichtung ME dargestellt. Die Auswahlstufe besteht aus einem Exklusiv-Oderverknüpfungsglied ED, aus einer monostabilen Kippstufe MK1, aus einer Verzögerungsstufe VS, aus zwei Undverknüpfungsgliedern UD1 und UD2 und aus einem Oderverknüpfungsglied OD1. Die monostabile Kippstufe MK1 ist durch auf- und absteigende Flanken triggerbar und besitzt eine Verweilzeit TK1. Am Ausgang der monostabilen Kippstufe ist während der Verweilzeit TK1 ein der logischen Null entsprechendes Potential abgreifbar.

Die an sich bekannte Verzögerungsstufe VS bewirkt eine zeitliche Versetzung der durchlaufenden Signale um eine Verzögerungszeit TV.

Die Messeinrichtung ME besteht aus monostabilen Kippstufen MK2, MK3 und MK4, einem Inverter I, zwei Undverknüpfungsgliedern UD3 und UD4, zwei Oderverknüpfungsgliedern OD2 und OD3, zwei Schwellwertschaltern SW1 und SW2, einem Integrator mit einer Integratorkapazität IC und zwei Integratorwiderständen R1 und R2, und einem Messwertspeicher MSP. Die monostabilen Kippstufen MK2, MK3 und MK4 sind durch ansteigende Flanken triggerbar, und besitzen Verweilzeiten TK2, TK3 und TK4. An den (nicht invertierten) Ausgängen der monostabilen Kippstufen MK2 bis MK4 ist während der Verweilzeiten TK2 bis TK4 ein der logischen Null entsprechendes Potential abgreifbar.

Die beiden vom Schrittmotorphasengeber SPG abgegebenen Schrittmotorphasen SP1(A) und SP2(B) liegen an den beiden Eingängen des Exklusiv-Oderverknüpfungsgliedes ED an. Der Ausgang des Exklusiv-Oderverknüpfungsgliedes ED ist mit dem Eingang der Verzögerungsstufe VS und mit dem Takteingang der monostabilen Kippstufe MK1 verbunden. Der Ausgang der Verzögerungsstufe VS, von dem ein Durchlasssignal DS abgegeben wird, ist mit einem Eingang des Undverknüpfungsgliedes UD1 und mit einem invertierenden Eingang des Undverknüpfungsgliedes UD2 verbunden. Am anderen Eingang des Undverknüpfungsgliedes UD1 liegt das vom Zweipunktstromregler ZSR1 abgegebene Reglersignal RS1 an. Am anderen Eingang des Undverknüpfungsgliedes UD2 liegt das vom Zweipunktstromregler ZSR2 abgegebene Reglersignal RS2 an. Die Ausgänge der beiden Undverknüpfungsglieder UD1 und UD2 sind mit den beiden Eingängen des Oderverknüpfungsgliedes OD1 verbunden. Vom Ausgang des Oderverknüpfungsgliedes OD1 wird ein Auswertesignal AW, und vom Ausgang der monostabilen Kippstufe MK1 wird ein Übernahmesignal US an die Messeinrichtung ME gegeben.

Das Auswertesignal AW liegt am Takteingang der monostabilen Kippstufe MK2 und an einem Eingang des Undverknüpfungsgliedes UD3 an. Das Auswertesignal AW liegt weiter über einen Inverter I am Takteingang der monostabilen Kippstufe MK4 und an einem Eingang des Undverknüpfungsgliedes UD4 an. Der Ausgang der monostabilen Kippstufe MK2 ist mit dem Takteingang der monostabilen Kippstufe MK3 und mit einem Eingang des Oderverknüpfungsgliedes OD2 verbunden. Am anderen Eingang des Oderverknüpfungsgliedes OD2 liegt das vom Ausgang der monostabilen Kippstufe MK1 abgegebene Übernahmesignal US an. Der nichtinvertierte Ausgang Q der monostabilen Kippstufe MK3 ist mit dem anderen Eingang des Undverknüpfungsgliedes UD3 verbunden. Der Ausgang der monostabilen Kippstufe MK4 ist mit dem anderen Eingang des Undverknüpfungsgliedes UD4 verbunden.

Der Ausgang des Undverknüpfungsgliedes UD3 ist mit dem nichtinvertierenden Eingang des Schwellwertschalters SW2 und mit dem einen Eingang des Oderverknüpfungsgliedes OD3 verbunden. Der Ausgang des Undverknüpfungsgliedes UD4 ist mit dem anderen Eingang des Oderverknüpfungsgliedes OD3 verbunden. Der Ausgang des Oderverknüpfungsgliedes OD3 ist mit dem nichtinvertierenden Eingang des Schwellwertschalters SW1 verbunden. An den beiden invertierenden Eingängen der Schwellwertschalter SW1 und SW2 liegt eine Referenzspannung UR2 an.

Die beiden Schwellwertschalter SW1 und SW2 und der Integrator IG sind in bekannter Weise durch Komparatorverstärker realisiert. Die Ausgänge der beiden Schwellwertschalter SW1 und SW2 sind über sogenannte Integratorwiderstände R1 und R2 mit dem invertierenden Eingang des Integrators IG verbunden. Der nichtinvertierende Eingang des Integrators IG ist mit dem Bezugspotential OV verbunden. Der Ausgang des Integrators IG, von dem ein Integratorsignal IS abgegeben wird, ist über die Integratorkapazität IC zum invertierenden Eingang rückgekoppelt. Die Integratorkapazität IC ist über einen Schalter S5 kurzschliessbar. Dieser Schalter S5 ist in bekanntner Weise aufgebaut, und wird vom invertierten Ausgang der monostabilen Kippstufen MK3 angesteuert. Durch einen positiven Impuls ist der Schalter S5 schliessbar.

Der Messwertspeicher MSP ist ein in bekannter Weise aufgebauter sogenannter Abtast- und Halte-Schaltkreis, in dessen Kondensatorspeicher das am Eingang anliegende Signal übernehmbar ist. Am Eingang des Messwertspeichers MSP liegt das vom Integrator IG abgegebene Integratorsignal IS an. Dieses wird in den Messwertspeicher MSP übernommen, wenn dieser an einem Übernahmeeingang UE ein der logischen Null entsprechendes Potential erhält, das vom Ausgang des Oderverknüpfungsgliedes OD2 abgegeben wird. Das heisst, durch einen negativen Impuls am Übernahmeeingang wird das Integratorsignal IS in den Messwertspeicher übernommen. Am Ausgang des Messwertspeichers MSP ist das Steuersignal SS abnehmbar.

In Fig. 6 sind Impulsfrequenzen auf einigen der Steuerleitungen der Ansteuerschaltung dargestellt. Dies sind im einzelnen in Zeile 1 der Schritaktt ST, in Zeile 2 und 3 die Schrittmotorphase SP1(A) und SP1(C), in Zeile 4 und 5 die Schrittmotorphase SP2(B) und SP2(D), in Zeile 6 der Motorstrom IP1 im Wicklungssystem W1, in Zeile 7 der Motorstrom IP2 im Wicklungssystem W2, in Zeile 8 das Durchlasssignal DS und in Zeile 9 das Übernahmesignal US.

Der Schritaktt ST (Zeile 1) besteht aus einer periodischen Folge von Rechteckimpulsen. Die Schrittmotorphasen SP1 und SP2 (Zeile 2 bis 5) bestehen aus periodischen Recktteckimpulsen, wobei auf den paarweise zugeordneten Steuerleitungen [(A) und (C) sowie (B) und (D)] jeweils Impulse entgegengesetzter Polarität auftreten.

Die Schrittmotorphasen SP1 und SP2 sind gegeneinander um 90° phasenversetzt. Die Richtung dieser Phasenversetzung ist durch die beiden Pfeile P1 und P2 dargestellt. Die beiden Pfeile P1 und P2 entsprechen den beiden Pfeilen P1 und P2 in Fig. 2, die dort die Verschieberichtung darstellen. Der Wert der Frequenz des Schrittaktes (Zeile 1) ist viermal so gross wie der Wert der Frequenz der beiden Schrittmotorphasen SP1 und SP2 (Zeile 2 bis 5).

Die Motorströme IP1 und IP2 (Zeile 6 und 7) bestehen aus einer Folge von leicht trapezförmigen, bipolaren Impulsen, die gegeneinander um 90° phasenversetzt sind. Die Überlagerungen der leicht trapezförmigen Impulse mit, durch die Stromregelung von dem Zweipunktstromreglern ZSR1 und ZSR2 bewirkten hochfrequenten Dreiecksimpulsen (ca. 20 kHz) ist hier nicht dargestellt.

Das von der Auswahlstufe AS abgegebene Durchlasssignal DS (Zeile 8) besteht aus einer periodischen Folge von Rechteckimpulsen. Die ansteigenden bzw. abfallenden Flanken des Durchlasssignals DS entsprechen den ansteigenden Flanken der Schrittmotorphase SP1(A) (Zeile 2) bzw. der Schrittmotorphase SP2(B) (Zeile 4), Und sind gegenüber diesen um die Verzögerungszeit TV zeitlich versetzt.

In Zeile 9 ist das ebenfalls von der Auswahlstufe AS abgegebene Übernahmesignal US dargestellt. Dieses besteht aus einer Folge von negativen Impulsen, wobei die Breite dieser Impulse durch die Verweilzeit TK1 der monostabilen Kippstufe MK1 bestimmt ist.

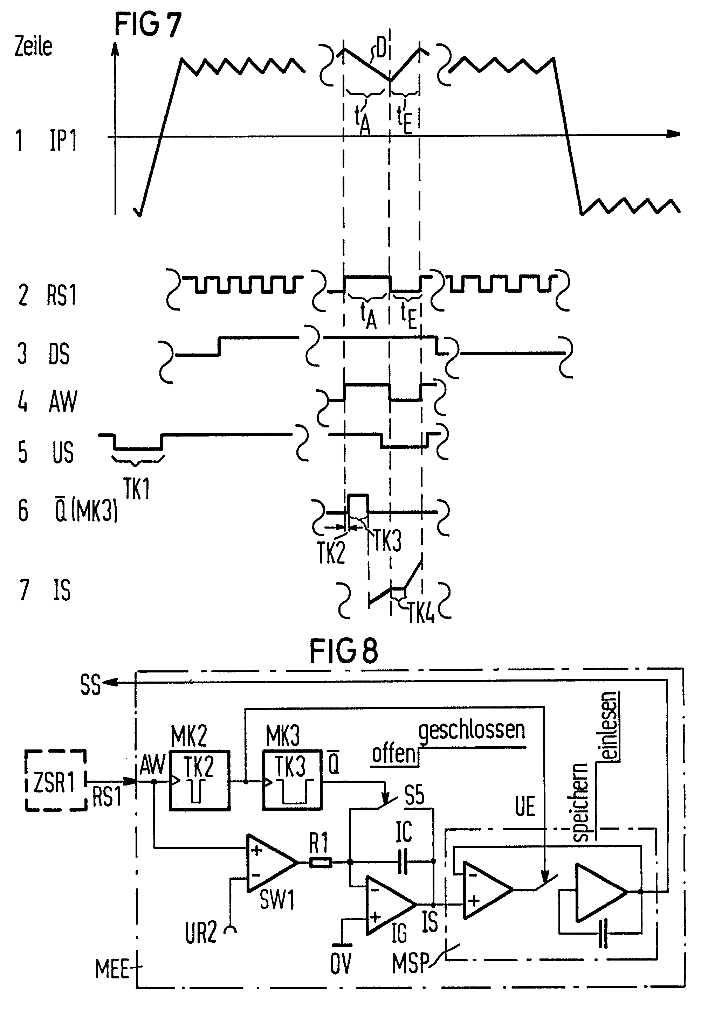

In Fig. 7 sind einige Impulssequenzen auf Steuerleitungen der Auswahlstufe AS und der Messeinrichtung ME bzw. im Schrittmotor SM dargestellt. Dies sind im einzelnen in Zeile 1 der Motorstrom IP1, in Zeile 2 das Reglersignal RS1, in Zeile 3 das Durchlasssignal DS und in den Zeilen 4 und 5 die von der Auswahlstufe AS (Fig. 5) abgegebenen Signale, das Auswertesignal AW und das Übernahmesignal US, in Zeile 6 das vom invertierten Ausgang $\overline{Q}$ der monostabilen Kippstufe MK3 abgegebene Signal, und in Zeile 7 das Integratorsignal IS.

In den Fig. 6 und 7 sind teilweise die gleichen Signale dargestellt, wobei die in Fig. 7 in stark vergrössertem Massstab dargestellt sind. Der Motorstrom IP1 besteht aus einem leicht trapezförmigen, bipolaren Impuls, der von hochfrequenten dreieckförmigen Impulsen überlagert ist. Diese werden, wie schon in der Beschreibung von Fig. 6 erläutert, von der Stromregelung bewirkt. Das von dem Zweipunktstromregler ZSR1 abgegebene Reglersignal RS1 bewirkt die sogenannte Restwelligkeit des Motorstromes IP1, die eine konstante Amplitude aufweist. Für den hier nicht dargestellten Motorstrom IP2 gilt Analoges.

Im folgenden wird die Wirkungsweise der Auswahlstufe AS und der Messeinrichtung ME (Fig. 5) unter Verwendung der Fig. 6 und 7 beschrieben. Auf den Wert der Verweilzeiten TK1 bis TK3 der monostabilen Kippstufen MK1 bis MK4 wird im Anschluss an die Funktionsbeschreibung eingegangen.

Die beiden Schrittmotorphasen SP1(A), SP2(B) (Fig. 6 Zeilen 2 und 4) werden durch das Exklusiv-Oderverknüpfungsglied ED verknüpft. Die vom Ausgang des Exklusiv-Oderverknüpfungsgliedes abgegebenen Signale durchlaufen die Verzögerungsstufe VS und sind an deren Ausgang um die Verzögerungszeit TV zeitlich versetzt, als Durchlasssignal DS (Fig. 6 Zeile 8 und Fig. 7 Zeile 3) abgreifbar. Durch die positiven und negativen Flanken des vom Ausgang des Exklusiv-Oderverknüpfungsgliedes ED abgegebenen Signals wird die monostabile Kippstufe MK1 getriggert. Vom Ausgang der monostabilen Kippstufe MK1 wird dadurch auf jede Flanke folgend ein negativer Impuls mit der Verweilzeit TK1 als Übernahmesignale US abgegeben (Fig. 6 Zeile 9 und Fig. 7 Zeile 5). Aufgrund des Durchlasssignals DS wird über die beiden Undverknüpfungsglieder UD1 und UD2 und über das Oderverknüpfungsglied OD1 abwechselnd eines der Regelsignale RS1 (Fig. 7 Zeile 2) oder RS2 (hier nicht dargestellt) als Auswertesignal AW von der Auswahlstufe AS ausgegeben.

Wenn das Durchlasssignal DS ein der logischen Eins entsprechendes Potential besitzt, wird dadurch vom Undverknüpfungsglied UD1 das Regelsignal RS1 über das Oderverknüpfungsglied OD1 als Auswertesignal AW ausgegeben. Dieser Fall ist in Fig. 7 in den Zeilen 2 bis 4 dargestellt. Wenn das Durchlasssignal DS ein der logischen Null entsprechendes Potential besitzt, so wird vom Undverknüpfungsglied UD2, an dessen invertierenden Eingang das Durchlasssignal DS anliegt, das Regelsignal RS2 über das Oderverknüpfungsglied OD1 als Auswertesignal AW ausgegeben.

Wie in Fig. 6 den Zeilen 6 bis 8 zu entnehmen ist, besitzt die Verzögerungszeit TV der Verzögerungsstufe VS einen solchen Wert, dass die Kommutierungszustände der Motorphasen IP1 und IP2 ausgeblendet werden. Dies bedeutet im einzelnen, dass in der Kommutierungsphase, in der die Motorphase IP1 ihre Polarität wechselt, das Regelsignal RS1 nicht als Auswertesignal AW ausgegeben wird. Analoges gilt für den Motorstrom IP2 und das Regelsignal RS2.

In Fig. 7 ist in Zeile 1 nochmals vergrössert ein Dreiecksimpuls D dargestellt, der dem Motorstrom IP1 überlagert ist. Dieser (negative) Dreiecksimpuls D besitzt eine abfallende Flanke mit einer Ausschaltzeit $t_A$ und eine ansteigende Flanke mit einer Einschaltzeit $t_E$. Der Dreiecksimpuls D, mit seinen beiden Schaltzeiten, wird bewirkt durch das rechteckförmige Regelsignal RS1 (Fig. 7 Zeile 2), welches während der Ausschaltzeit $t_A$ ein der logischen Eins und während der Einschaltzeit $t_E$ ein der logischen Null entsprechendes Potential besitzt. Die Zuordnung der Schaltzeiten zu den beiden möglichen Potentialen ist durch die Ausführungsform des Zweipunktstromreglers ZSR1 (siehe Fig. 3) bestimmt.

Da das Durchlasssignal DS (Fig. 7 Zeile 3) in der Zeitspanne, während der der Dreiecksimpuls D auftritt, ein der logischen Eins entsprechendes Potential besitzt, wird während dieser Zeitspanne das rechteckförmige Regelsignal RS1 mit den beiden Schaltzeiten $t_A$ und $t_E$ als Auswertesignal AW (Fig. 7 Zeile 4) ausgegeben.

Der Messzyklus beginnt mit der abfallenden Flanke des Dreiecksignals D, d.h. mit der ansteigenden Flanke des Auswertesignals AW.

Die ansteigende Flanke des Auswertesignals AW zu Beginn der Ausschaltzeit $t_A$ bewirkt, dass die monostabile Kippstufe MK2 getriggert wird. Hierdurch wird von der monostabilen Kippstufe MK2 ein negativer Impuls mit der Verweilzeit TK2 an das Oderverknüpfungsglied OD2 und an die monostabile Kippstufe MK3 gegeben. Vom Oderverknüpfungsglied OD2 wird dieser Impuls an den Übernahmeeingang UE des Messwertspeichers MSP gegeben, wodurch das zu diesem Zeitpunkt anliegende Integratorsignal IS eingelesen wird. Dies geschieht dann, wenn das Übernahmesignal US ein der logischen Null entsprechendes Potential aufweist, d.h. während der Verweilzeit TK1. Wenn das Übernahmesignal ein der logischen Eins entsprechendes Potential aufweist, ist also die Übernahme in den Messwertspeicher MSP gesperrt.

Durch die ansteigende Flanke des von der monostabilen Kippstufe MK2 ausgegebenen Impulses wird die monostabile Kippstufe MK3 getriggert, die darauf einen negativen Impuls an einem Ausgang Q und einen positiven Impuls an einem invertierten Ausgang $\overline{Q}$, beide mit der Verweilzeit TK3, ausgibt.

Mit der ansteigenden Flanke des Impulses am Ausgang Q wird über das Undverknüpfungsglied UD3 das Auswertesignal AW an den nichtinvertierenden Eingang des Schwellwertschalters SW2 und ebenso über das Oderverknüpfungsglied OD3 an den nichtinvertierenden Eingang des Schwellwertschalters SW1 gegeben. Verzögert um die Summe der Verweilzeiten TK2 und TK3 wird einerseits durch das vom Ausgang Q der monostabilen Kippstufe MK3 abgegebene Signal der Schalter S5, durch den die Integratorkapazität IC kurzschliessbar ist, geöffnet, und andererseits durch die Verstärkung des Auswertesignals AW in den Schwellwertschalter SW1 und SW2 der Integrationsvorgang des Integrators IG gestartet. Hierbei gibt der Integrator IG an seinem Ausgang eine linear ansteigende Spannung als Integratorsignal IS ab. Der Integrationsvorgang wird mit der abfallenden Flanke des Regelsignals RS1 (Fig. 7 Zeile 2) am Ende der Ausschaltzeit $t_A$ angehalten, da nun vom Undverknüpfungsglied UD3 kein Signal mehr an die Schwellwertschalter SW1 und SW2 gegeben wird.

Mit dieser abfallenden Flanke des Regelsignals RS1 wird über den Inverter I die monostabile Kippstufe MK4 getriggert, die darauf einen negativen Impuls mit der Verweilzeit TK4 abgibt. Mit der ansteigenden Flanke dieses Impulses wird das invertierte Auswertesignal $\overline{AW}$ über das Undverknüpfungsglied UD4 und über das Oderverknüpfungsglied OD3 an den nichtinvertierenden Eingang des Schwellwertschalters SW1 gegeben. Verzögert um die Verweilzeit TK4, gerechnet von der abfallenden Flanke des Regelsignals RS1 am Ende der Ausschaltzeit $t_A$ bzw. zu Beginn der Anschaltzeit $t_E$, wird der Integrationsvorgang des Integrators IG fortgesetzt. Dies bedeutet einen weiteren linearen Anstieg der am Ausgang des Integrators abgegebenen Spannung d.h. des Integratorsignals IS (Fig. 7 Zeile 7).

Wie aus Fig. 7, Zeile 7 zu entnehmen ist, besitzt das Integratorsignal IS während der Ausschaltzeit $t_A$ und während der Anschaltzeit $t_E$ verschiedene Steigungen. Während der Ausschaltzeit $t_A$ ist am Integrator IG die Zeitkonstante wirksam, die aus der Parallelschaltung der beiden Integratorwiderstände R1 und R2 und der Integratorkapazität IC gebildet wird. Während der Einschaltzeit $t_E$ ist am Integrator IG die Zeitkonstante wirksam, die aus dem Integratorwiderstand R1 und der Integratorkapazität IC gebildet wird.

Mit der ansteigenden Flanke des Regelsignals RS1 (Fig. 7 Zeile 2) am Ende der Einschaltzeit $t_E$, bzw. der abfallenden Flanke des invertierten Auswertesignals $\overline{AW}$ wird vom Undverknüpfungsglied UD4 kein Signal mehr abgegeben, und somit der Integrationsvorgang des Integrators IG angehalten. Die ansteigende Flanke des Regelsignals RS1 am Ende der Einschaltzeit $t_E$ entspricht der ansteigenden Flanke zu Beginn der nächsten Ausschaltzeit, und somit beginnt der Messzyklus von neuem. Durch den von der monostabilen Kippstufe MK2 ausgegebenen Impuls, der über das Oderverknüpfungsglied OD2 an den Übernahmeeingang UE des Messwertspeichers MSP gegeben wird, wird zu derjenigen ansteigenden Flanke des Regelsignals RS1 bzw. des Auswertesignals AW, die innerhalb der Verweilzeit TK1 des Übernahmesignals US liegt, das am Eingang des Messwertspeichers MSP anliegende Integratorsignal IS in diesen eingelesen.

Verzögert um die Verweilzeit TK2, gerechnet von jeder ansteigenden Flanke des Auswertesignals AW an, wird vom invertierten Ausgang $\overline{Q}$ der monostabilen Kippstufe MK3 der Schalter S5 geschlossen und dadurch der Integrator IG zurückgesetzt.

Im folgenden wird die Einstellung der Werte der Verweilzeiten TK1 bis TK4 der monostabilen Kippstufen MK1 bis MK4 beschrieben.

Die Werte der Verweilzeiten TK2 bis TK4 werden derart eingestellt, dass das Steuersignal SS beim Stillstand des Schrittmotors (ohne angreifendes Drehmoment) dem Wert Null des Lastwinkels entspricht. Die monostabile Kippstufe MK2 gibt hierbei einen kurzen Impuls, der die Übernahme des am Messwertspeicher MSP anliegenden Integratorsignals IS bewirkt.

Die monostabile Kippstufe MK1 gibt bei jeder Kommutierung eines der Motorströme IP1 oder IP2 bzw. zu jeder ansteigenden Flanke des Schrittaktes ST einen negativen Impuls ab (siehe Fig. 6, Zeilen 1, 6, 7 und 9). Die Verweilzeit TK1 weist einen derartigen Wert auf, dass währenddessen ein Messzyklus beendet ist, d.h. dass vom Integrator IG das einer Ausschaltzeit $t_A$ und einer Einschaltzeit $t_E$ (siehe Fig. 7) des Impulses D entsprechende Integratorsignal IS abgegeben wird. Mit der ansteigenden Flanke zur nächsten Ausschaltzeit des Auswertesignals AW (Fig. 7 Zeile 4) wird dann das Einlesen des Integratorsignals IS in den Messwertspeicher MSP durch den von der monostabilen Kippstufe MK2 abgegebenen negativen Impuls (über das Oderverknüpfungsglied OD2) bewirkt.

Vom Ausgang des Messwertspeichers MSP der Messeinrichtung ME ist, zum Zeitpunkt der Kommutierung eines der Motorströme IP1 oder IP2, das Steuersignal SS abnehmbar, welches daher abhängig vom dynamischen Lastwinkel ist. Dieses Steuersignal SS ist zur Regelung des Schrittmotors SM verwendbar.

Bei Verzicht auf die monostabile Kippstufe MK1 (und das Oderverknüpfungsglied OD2) entspricht das Steuersignal SS dem statischen Lastwinkel.

Die in Fig. 5 dargestellte Auswahlstufe AS und Messeinrichtung ME geben ein Steuersignal SS ab, welches sowohl abhängig vom dynamischen Lastwinkel als auch abhängig vom statischen Lastwinkel sein kann.

In Fig. 8 ist eine vereinfachte Ausführungsform der Auswahlstufe AS und der Messeinrichtung ME, die einfache Messeinrichtung MEE dargestellt. Eine Auswahlstufe AS ist hierbei nicht notwendig. Die Bausteine, aus denen die einfache Messeinrichtung MEE aufgebaut ist, tragen die gleiche Bezeichnung wie die in der Messeinrichtung ME (Fig. 5) verwendeten.

Dies sind im einzelnen die monostabilen Kippstufen MK2, MK3, der Schwellwertschalter SW1, der Integrator IG, mit dem Integratorwiderstand R1 und der Integratorkapazität IC, der die Integratorkapazität IC kurzschliessende Schalter S5, und der Messwertspeicher MSP.

Bei der einfachen Messwerteinrichtung MEE liegt das vom Zweipunktstromregler ZSR1 bzw. ZSR2 abgegebene Reglersignal RS1 bzw. RS2 direkt als Auswertesignal AW am Takteingang der monostabilen Kippstufe MK2 und am nichtinvertierenden Eingang des Schwellwertschalters SW1 an. Der Ausgang der monostabilen Kippstufe MK2 ist mit dem Takteingang der monostabilen Kippstufe MK3 und dem Übernahmeeingang UE des Messwertspeichers MSP verbunden. Der Schalter S5 wird vom invertierten Ausgang $\overline{Q}$ der monostabilen Kippstufe MK3 angesteuert. Am invertierenden Eingang des Schwellwertschalters SW1 liegt die Referenzspannung UR2 an. Der Ausgang des Schwellwertschalters SW1 ist über den Integratorwiderstand R1 mit dem invertierenden Eingang des Integrators IG verbunden. Der nichtinvertierende Eingang des Integrators IG ist mit dem Bezugspotential OV verbunden. Der Ausgang des Integrators IG ist mit der Integratorkapazität IC, die mit dem Schalter S5 kurzschliessbar ist, auf den invertierenden Eingang rückgekoppelt. Das vom Ausgang des Integrators IG abgegebene Integratorsignal IS liegt am Eingang des Messwertspeichers MSP an, an dessen Ausgang das Steuersignal SS abgreifbar ist.

Die Wirkungsweise der in Fig. 8 dargestellten einfachen Messeinrichtung MEE ist analog zu der in Fig. 5 dargestellten Messeinrichtung ME und braucht daher nicht extra erläutert zu werden. Hierbei ist die Verweilzeit TK3 der monostabilen Kippstufe MK3 grösser, wie die entsprechende in der Messeinrichtung ME (Fig. 5). In der einfachen Messeinrichtung MEE entspricht die Verweilzeit TK3 den beiden Verweilzeiten TK3 und TK4 der Messeinrichtung ME.

Das von der einfachen Messeinrichtung MEE abgegebene Steuersignal SS st abhängig vom statischen Lastwinkel und zur Regelung des Schrittmotors SM verwendbar.

Bei einer entsprechenden Anpassung (die Kommutierungszustände der Motorströme IP1 und IP2 müssen im Reglersignal RS1 bzw. RS2 ausgeblendet werden) ist das von der einfachen Messeinrichtung MEE abgegebene Steuersignal SS abhängig vom dynamischen Lastwinkel des Schrittmotors SM. In diesem Fall kann aber nur ein Reglersignal RS1 bzw. RS2 für ein Wicklungssystem W1 bzw. W2 ausgewertet werden. Weiter sind die Zeitkonstanten für die Integration in der Einschaltzeit $t_E$ und der Ausschaltzeit $t_A$ einander gleich.

Das erfindungsgemässe Messverfahren ist nicht auf zweiphasig ansteuerbare Schrittmotore beschränkt. Bei einer entsprechenden Anpassung, insbesondere der Auswahlstufe AS, kann das Messverfahren auch für mehrphasige Schrittmotoren verwendet werden.

*Bezugszeichenliste*

| | |
|---|---|
| SS | Steuersignal |
| S | Steuerung |
| TG | Taktgeber |
| ST | Schrittakt |
| DG | Drehrichtungsgeber |
| DR | Drehrichtungssignal |
| SG | Sollwertgeber |
| UR1, UR2 | Referenzspannungen |
| SPG | Schrittmotorphasengeber |
| SP1, SP2 | Schrittmotorphasen |
| ZSR1, ZSR2 | Zweipunktstromregler |
| RS1, RS2 | Regelsignale |
| SB1, SB2 | Schaltbrücke |
| RM1, RM2 | Messwiderstände |
| M1, M2 | Messsignale |
| SM | Schrittmotor |
| W1, W2 | Wicklungssysteme |
| AS | Auswahlstufe |
| ME | Messeinrichtung |
| A, B, C, D | Ausgänge des Schrittmotorphasengebers |
| P1, P2 | Pfeile |
| IP1, IP2 | Motorstrom im Wicklungssystem 1, 2 |
| S1 - S5 | Schalter UD1-UD4 |
| SS1 - SS4 | Schaltsteuerungen |
| D1 - D4 | Dioden |
| U | Spannungsquelle |
| ED | Exklusiv-Oderverknüpfungsglied |
| OD1 - OD3 | Oderverknüpfungsglieder |
| UD1 - UD4 | Undverknüpfungsglieder |
| MK1 - MK4 | monostabile Kippstufen |
| TK1 - TK4 | Verweilzeiten |
| VS | Verzögerungsstufe |
| DS | Durchlasssignal |
| TV | Verzögerungszeit |
| SW1, SW2 | Schwellwertschalter |
| IG | Integrator |
| IC | Integratorkapazität |
| R1, R2 | Integratorwiderstände |
| IS | Integrationssignal |
| AW | Auswertesignal |
| US | Übernahmesignal |
| MSP | Messwertspeicher |
| UE | Übernahmeeingang |
| D | Dreiecksimpuls |
| $t_E$, $t_A$ | Einschalt-, Ausschaltzeit |

**Patentansprüche**

1. Messverfahren für den statischen Lastwinkel eines Schrittmotors (SM) der mit einem hochfrequent schaltgeregelten Motorstrom (IP1, IP2) versorgt und der zur Lastwinkelbestimmung des Schrittmotors (SM) ausgewertet wird, wobei dessen hochfrequente Überlagerung mit Dreiecksimpulsen konstanter Amplitude Einschalt- und Ausschaltzeiten (t$_E$, t$_A$) aufweist, dadurch gekennzeichnet, dass aus den Änderungen der Einschalt- und Ausschaltzeiten (t$_E$, t$_A$) ein lastwinkelabhängiges Steuersignal (SS) ermittelt wird.

2. Messverfahren nach Anspruch 1, dadurch gekennzeichnet, dass Zweipunktstromregler (ZSR1, ZSR2) durch die Abgabe von pulsbreitenmodulierten Regelsignalen (RS1, RS2) die Einschalt- und Ausschaltzeiten (t$_E$, t$_A$) bewirken.

3. Messverfahren nach Anspruch 1 oder 2, dadurch gekennzeichnet, dass die Änderung der Einschalt- und Ausschaltzeitem (t$_E$, t$_A$) aus den Änderungen der pulsbreitenmodulierten Regelsignale (RS1, RS2) ermittelt werden, und dass die Kommutierungsphasen der Motorströme (IP1, IP2) in den Regelsignalen (RS1, RS2) ausgeblendet werden.

4. Messverfahren nach einem der Ansprüche 1 bis 3, dadurch gekennzeichnet, dass das Steuersignal (SS) zu den Kommutierungszeitpunkten der Motorströme (IP1, IP2) abhängig vom dynamischen Lastwinkel ausgegeben wird.

5. Schaltungsanordnung zur Durchführung des Verfahrens nach Anspruch 1, gekennzeichnet durch eine Messeinrichtung (ME, MEE), die die Änderung der Einschalt- und Ausschaltzeit (t$_E$, t$_A$) als analogen Spannungswert (Referenzspannung UR) ausgibt.

6. Schaltungsanordnung nach Anspruch 5, dadurch gekennzeichnet, dass ein Integrator (IG) mit einer Integratorkapazität (IC) und einem Integratorwiderstand (R1) vorgesehen ist, der den analogen Spannungswert als Integratorsignal (IS) durch Integration über die Änderung der Einschalt- und Ausschaltzeiten (t$_E$, t$_A$) ausgibt.

7. Schaltungsanordnung nach Anspruch 6, gekennzeichnet durch einen Integrator (IG) mit schaltbaren Zeitkonstanten (R1, IC bzw. R2, IC) für die Integration über die Änderung der Einschaltzeiten (t$_E$) und der Ausschaltzeiten (t$_A$).

8. Schaltungsanordnung nach einem der Ansprüche 5 bis 7, dadurch gekennzeichnet, dass die Änderung der Einschalt- und Ausschaltzeiten (t$_E$, t$_A$) aus den Änderungen der pulsbreitenmodulierten Regelsignale (RS1, RS2) ermittelt wird.

9. Schaltungsanordnung nach einem der Ansprüche 5 bis 8, gekennzeichnet durch eine Auswahlstufe (AS), von der abwechselnd eines der Reglersignale (RS1, RS2) so zur Messeinrichtung (ME) durchgeschaltet wird, dass die Kommutierungsphasen der Motorströme (IP1, IP2) ausgeblendet werden.

10. Schaltungsanordnung nach einem der Ansprüche 5 bis 9, gekennzeichnet durch eine Auswahlstufe (AS) die bewirkt, dass das Integratorsignal (IS) zu den Kommutierungszeitpunkten jedes Motorstromes (IP1, IP2) ausgegeben wird.

## Claims

1. A method of measuring the static load angle of a stepping motor (SM) supplied with a motor current (IP1, IP2) switch-controlled at high frequencies and analysed to determine the load angle of the stepping motor (SM), where the superimposition of high frequency triangular pulses of constant amplitude onto the motor current is governed by switch-on and switch-off times (t$_E$, t$_A$), characterised in that control signal (SS) dependent upon the load angle is determined from the changes in the switch-on and switch-off times (t$_E$, t$_A$).

2. A method of measurement as claimed in Claim 1, characterised in that two-position current controllers (ZSR1, ZSR2) produce the switch-on and switch-off times (t$_E$, t$_A$) by emitting pulse-width modulation control signals (RS1, RS2).

3. A method of measurement as claimed in Claim 1 or 2, characterised in that the variations in the switch-on and switch-off times (t$_E$, t$_A$) are determined from variations in the pulse-width of the modulated control signals (RS1, RS2), and that the commutation phases of the motor currents (IP1, IP2) in the control signals (RS1, RS2) are gated out.

4. A method of measurement as claimed in one of Claims 1 to 3, characterised in that the control signal (SS) is emitted at the commutation times of the motor currents (IP1, IP2) in dependence upon the dynamic load angle.

5. A circuit arrangement for implementing the method claimed in Claim 1, characterised by a measuring device (ME, MEE) which emits the variation in the switch-on and switch-off times (t$_E$, t$_A$) as analogue voltage values (reference voltage UR).

6. A circuit arrangement as claimed in Claim 5, characterised in that an integrator (IG) is provided with an integrator capacitor (IC) and an integrator resistor (R1) which emits the analogue voltage value as integrator signal (IS) by integration of the alternation in the switch-on and switch-off times (t$_E$, t$_A$).

7. A circuit arrangement as claimed in Claim 6, characterised by an integrator (IG) having switchable time constants (R1, IC and R2, IC) for integration of the alternation in the switch-on times (t$_E$) and switch-off times (t$_A$).

8. A circuit arrangement as claimed in one of Claims 5 to 7, characterised in that the variation in the switch-on and switch-off times (t$_E$, t$_A$) is determined from the changes in the pulse-width modulated control signals (RS1, RS2).

9. A circuit arrangement as claimed on one of Claims 5 to 8, characterised by a selector stage (AS) by which the control signals (RS1, RS2) are alternately switched through to the measuring device (ME) in such manner that the commutation phases of the motor currents (IP1, IP2) are gated out.

10. A circuit arrangement as claimed on one of Claims 5 to 9, characterised by a selector stage (AS) which causes the integrator signal (IS) to be emitted at the commutation times of each motor current (IP1, IP2).

## Revendications

1. Procédé de mesure de l'angle de charge statique d'un moteur pas-à-pas (SM), qui est alimenté par un courant (IP1, IP2) réglé par commutation en haute fréquence et qui est évalué pour la détermination de l'angle de charge du moteur pas-à-pas (SM), la superposition en hautes fréquences d'impulsions triangulaires d'amplitude constante à ce courant de charge comportant des intervalles de branchement et de débranchement ($t_E$, $t_A$) caractérisé par le fait qu'on détermine un signal de commande (SS), qui dépend de l'angle de charge, à partir de la variation des durées de branchement et de débranchement ($t_E$, $t_A$).

2. Procédé de mesure selon la revendication 1, caractérisé par le fait que des régulateurs de courant à deux positions (ZSR1, ZSR2) règlent les durées de branchement et de débranchement ($t_E$, $t_A$), au moyen de la délivrance de signaux de réglage (RS1, RS2) modulés selon une modulation d'impulsions en durée.

3. Procédé de mesure selon la revendication 1 ou 2, caractérisé par le fait que les variantions des durées de branchement et de débranchement ($t_E$, $t_A$) sont déterminées par les variations des signaux de réglage (RS1, RS2) modulés selon une modulation d'impulsions en durée, et que les phases de commutation des courants (IP1, IP2) du moteur sont occultées dans les signaux de réglage (RS1, RS2).

4. Procédé de mesure selon l'une des revendications 1 à 3, caractérisé par le fait que le signal de commande (SS) est délivré aux instants de commutation des courants (IP1, IP2) du moteur en fonction de l'angle de charge dynamique.

5. Montage pour la mise oeuvre du procédé suivant la revendication 1, caractérisé par un dispositif de mesure (ME, MEE), qui délivre la variation des durées de branchement et de débranchement ($t_E$, $t_A$) sous la forme d'une valeur de tension analogique (tension de référence UR).

6. Montage suivant la revendication 5, caractérisé par le fait qu'il est prévu un intégrateur (IG) comportant une capacité d'intégrateur (IC) et une résistance d'intégrateur (R1), qui délivrent la tension analogique en tant que signal d'intégrateur (IS) par intégration sur la variation des durées de branchement et de débranchement ($t_E$, $t_A$).

7. Montage suivant la revendication 6, caractérisé par un intégrateur (IG) possédant des constantes de temps commutables (R1, IC ou R2, IC) pour l'intégration sur la variation des durées de branchement ($t_E$) et des durées de débranchement ($t_A$).

8. Montage suivant l'une des revendications 5 à 7, caractérisé par le fait que la variation des durées de branchement et de débranchement ($t_E$, $t_A$) est déterminée à partir des variations des signaux de réglage (RS1, RS2) modulés selon une modulation d'impulsions en durée.

9. Montage suivant l'une des revendications 5 à 8, caractérisé par un étage de sélection (AS) par lequel en alternance l'un des signaux (RS1, RS2) du régulateur est transmis au dispositif de mesure (ME) de telle sorte que les phases de commutation des courants (IP1, IP2) du moteur sont occultées.

10. Montage suivant l'une des revendications 5 à 9, caractérisé par un étage de sélection (AS) qui agit de telle sorte que le signal (IS) de l'intégrateur est délivré aux instants de commutation de chaque courant (IP1, IP2) du moteur.

# FIG 1

# FIG 2

## FIG 3

## FIG 4

FIG 5

FIG 6

0 140 159

**FIG 7**

Zeile

1   IP1

2   RS1

3   DS

4   AW

5   US

6   $\bar{Q}$ (MK3)

7   IS

**FIG 8**

SS

MK2   MK3   geschlossen

offen

ZSR1   AW   TK2   TK3   $\bar{Q}$   S5

RS1   IC

einlesen

speichern

UE

R1

SW1

UR2   IG   IS

0V   MSP

MEE

19